(19) **Europäisches Patentamt**

**European Patent Office**

**Office européen des brevets**

(11) **EP 1 631 089 A1**

(12) **EUROPEAN PATENT APPLICATION**

(43) Date of publication:
**01.03.2006 Bulletin 2006/09**

(51) Int Cl.:
*H04N 7/26* (2006.01)     *H04N 7/46* (2006.01)
*H04N 7/36* (2006.01)

(21) Application number: **04020569.2**

(22) Date of filing: **30.08.2004**

(84) Designated Contracting States:
**AT BE BG CH CY CZ DE DK EE ES FI FR GB GR
HU IE IT LI LU MC NL PL PT RO SE SI SK TR**
Designated Extension States:
**AL HR LT LV MK**

(71) Applicant: **MATSUSHITA ELECTRIC INDUSTRIAL
CO., LTD.
Osaka
5718501 (JP)**

(72) Inventors:
• **Sasai, Hisao
Osaka-shi
Osaka 533-0013 (JP)**

• **Kondo, Satoshi
Yawata-shi
Kyoto 614-8361 (JP)**
• **Wedi, Thomas
64823 Gross-Umstadt (DE)**
• **Schlockermann, Martin
63322 Roedermark (DE)**
• **Wittmann, Steffen
63263 Neu-Isenburg (DE)**

(74) Representative: **Grünecker, Kinkeldey,
Stockmair & Schwanhäusser
Anwaltssozietät
Maximilianstrasse 58
80538 München (DE)**

(54) **Video coding apparatus and decoding apparatus**

(57)     A coding apparatus of the present invention comprises: a conversion unit that converts the first video data into the second video data with a low resolution; a coding unit that codes to compress the second video data to generate stream data; a generation unit that generates addition information in order to convert the resolution of the second video data; and an output unit that outputs stream data in association with the corresponding addition information.

FIG. 2

**Description**

**Technical Field**

This present invention relates to a coding apparatus and a decoding apparatus that converts resolutions of video data.

**Background Art**

Japanese Laid-Open Patent application No. 10-126749 (called document 1 from here) discloses technique for transforming an interlace image into a progressive image in a form of a decoding apparatus that converts resolution. In this conventional technique, a progressive image is generated using motion vectors included in a coding bit stream of the interlace image.

In "Consideration on a method for converting interlaced images to progressive scanned images using motion compensation" (Taiichiro Kurita, Yukio Sugiura, Shingakuron (D-II),vol. J78-D- II , no.1, pp. 40 to 49, Jan. 1995) (called document 2 from here), pixels in a progressive image is estimated based on an interlace image using filtering and the like, and the image area analogous to the image area with the pixels is made to be high-resolution image area by motion estimation.

However, according to document 2, an inappropriate motion vector may be used in the case where the accuracy of the filter for estimating high-resolution is not good, which causes a problem that the accuracy of the high-resolution image is not good.

According to document 1, there is a case where motion vectors are erroneous because motion vectors included in the bit stream are not necessarily equal to the motion of the image, which causes a problem that the accuracy of the high-resolution image is not good.

Further, according to document 2, as motion vectors are detected in the decoding apparatus, these motion vectors can realize a motion nearer to the motion of the image than the motion vectors included in a bit stream can do, but this entails a new problem that the processing workload of the decoding apparatus drastically increases.

**Disclosure of Invention**

An object of the present invention is to provide a coding apparatus and a decoding apparatus that generates high-resolution images from low-resolution images to realize low processing amount and high image quality.

In order to achieve the above-mentioned object, an image coding apparatus of the present invention comprises: a conversion unit operable to convert first video data into second video data, the second video data having a lower resolution than the first video data; a coding unit operable to code to compress the second video data, the coded second video data being outputted as stream data; a generation unit operable to generate addition information for converting the resolution of the second video data; and an output unit operable to output the stream data and the addition information that are associated with each other.

Here, the generation unit may generate the addition information indicating motions of images in the first video data.

With this structure, it is possible to reduce the processing amount for realizing high-resolution because the decoding apparatus can obtain addition information indicating motions of images along with stream data and needs neither to detect motions of images so as to generate high-resolution images nor to detect motions at the time of decoding. Further, it is possible to prevent the image quality of the high-resolution images from deteriorating because of motion detection errors because high-resolution images are generated from the addition information that includes information on the high-resolution images.

Here, the generation unit may include a motion vector detection unit operable to detect motion vectors in the first video data, and the generation unit may generate the addition information based on the motion vectors detected by the motion vector detection unit.

With this structure, as the coding apparatus detects the addition information indicating the motions of images not from the second video data with a low resolution but from the first video data with a high-resolution, the decoding apparatus can generate high-resolution images with a high image quality.

Here, the generation unit may generate difference motion information indicating a difference between a first motion vector and a second motion vector, the first motion vector being detected in the first video data by the motion vector detection unit, the second motion vector being detected in the second video data by the coding unit, the first motion vector and the second motion vector being in a corresponding relation, and the addition information including the difference motion information.

With this structure, as the addition information is generated as difference motion information, it is possible to reduce the code generation amount of the addition information.

Here, the addition information may include conversion mode information for converting the resolution of the second video data, and the conversion mode information may indicate one of (a) a first mode indicating that pixels should be interpolated using pixels that exist around current pixels in term of time or space and (b) a second mode indicating that the addition information includes motion vectors.

With this structure, it becomes possible to suitably select realizing high-resolution by time or space interpolation or by motion vectors, and thus the image quality can further be improved.

Here, the coding unit may code an image adaptively using, block by block, one of (a) an intra coding mode, (b) a forward prediction coding mode, (c) a backward prediction coding mode and (d) a bi-prediction coding mode, the addition information may include conversion mode information for converting the resolution of the second video data, and the conversion mode information may indicate one of (A) a first mode indicating that pixels should be interpolated using pixels that exist around current pixels in term of time or space, (B) a second mode indicating that the addition information includes a forward motion vector, (C) a third mode indicating that the addition information includes a backward motion vector, and (D) a fourth mode indicating that the addition information includes a plurality of motion vectors.

Here, the generation unit may code the conversion mode information in association with said (a) to (d).

With this structure, as the transformation mode information is coded in association with the coding mode by the coding unit, it is possible to reduce the generation code amount of the transformation mode information.

Also, the image decoding apparatus that decodes coded first video data and coded second video data in the present invention, comprises: an input unit operable to obtain addition information indicating motions of images in the first video data and stream data that is the coded second video data; a decoding unit operable to decode the stream data so as to generate the second video data; and a high-resolution realizing unit operable to convert the second video data into the first video data based on the addition information, the second video data having a lower resolution than the first video data.

With this structure, it is possible to reduce the processing amount for realizing high-resolution because the decoding apparatus can obtain the addition information indicating the motions of images along with the stream data, and needs neither to detect motions of images so as to generate high-resolution images nor to detect motions at the time of decoding. Further, it is possible to prevent the image quality of the high-resolution images from deteriorating because of motion detection errors because high-resolution images are generated from the addition information that includes information on the high-resolution images.

Here, the image decoding apparatus, further comprises a selection unit operable to select one of the second video data decoded by the decoding unit and the first video data converted by the high-resolution realizing unit.

Here, the selection unit may select one of the first and second video data depending on a resolution used by a display device.

With this structure, it is possible to select the first video data with a high-resolution or the second video data with a low-resolution depending on the resolution of the display apparatus.

Also, the coding method, the decoding method, the program and the semiconductor apparatus of the present invention have the same structure and effects as the one mentioned above.

**Brief Description of Drawings**

These and other objects, advantages and features of the invention will become apparent from the following description thereof taken in conjunction with the accompanying drawings that illustrate a specific embodiment of the invention. In the Drawings:

FIG. 1 is an illustration explaining the outline structure of the coding apparatus and the decoding apparatus of the present invention;
FIG. 2 is a block diagram showing the structure of the coding unit 101 and the addition information generation unit 102;
FIG. 3 is a diagram of the difference motion vector;
FIG. 4A and 4B are illustrations of generating high-resolution images by time or space interpolation;
FIG. 5 is an illustration explaining a relation between low-resolution images and high-resolution images;
FIG. 6A and 6B are diagrams indicating codes of interpolation image generation modes;
FIG. 7 is a flow chart showing image coding processing;
FIG. 8 is a flow chart showing generation mode selection processing;
FIG. 9A and 9B are diagrams indicating a stream format of the addition information associated with the stream data;
FIG. 10 is a flow chart showing decoding processing;
FIG. 11 is a flow chart showing high-resolution image generation processing;
FIG. 12 is a flow chart showing another example of image coding processing;
FIG. 13A to 13C are illustrations for explaining the case of causing a computer to execute the coding program and the decoding program using a flexible disc that includes these programs;

FIG. 14 is an illustration showing the whole structure of a content supply system that realizes a content distribution service;

FIG. 15 is a block diagram showing a mobile phone ex115 for which the image coding method and the image decoding method are used;

FIG. 16 is an illustration of the external view of the mobile phone; and

FIG. 17 is an illustration of a digital broadcasting system.

**Best Mode for Carrying Out the Invention**

(First Embodiment)

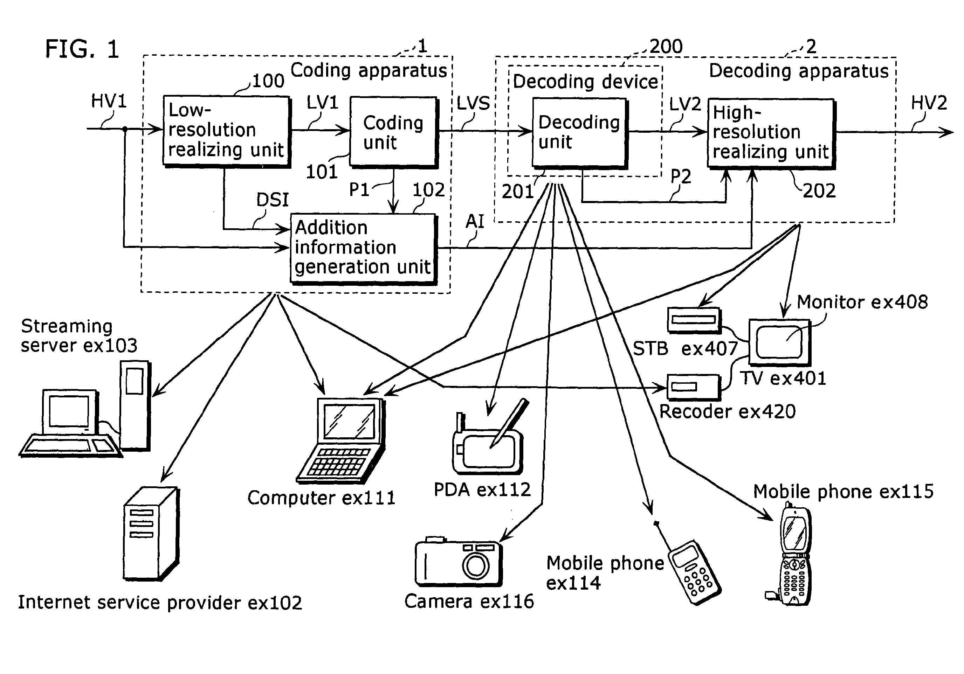

FIG. 1 is a block diagram showing the outline structure of the coding apparatus and the decoding apparatus in the first embodiment of the present invention.

The coding apparatus 1 comprises a low-resolution realizing unit 100, a coding unit 101 and an addition information generation unit 102 as shown in the figure. An apparatus used as the coding apparatus 1 is, for example, a computer ex111, an internet service provider ex102 and a streaming server ex103 and the like.

The low-resolution realizing unit 100 converts the high-resolution video data HV1 into the low-resolution video data LV1. The resolution of the low-resolution video data LV1 is lower than the resolution of the high-resolution video data. For example, the high-resolution video data HV1 is VGA (640 x 480 pixels) and the low-resolution video data LV1 is QVGA (320 x 240 pixels).

The coding unit 101 codes to compress the low-resolution video data LV1. The coding is performed in, for example, MPEG1, 2, 4, 4AVC and the like. The low-resolution video data LV1 after coding is outputted as the low-resolution video stream LVS.

The addition information generation unit 102 generates the addition information AI for converting the resolution of the second video data. The addition information AI includes motion information indicating the motions of images in the high-resolution video data HV1 and the conversion mode information for generating the high-resolution video data from the low-resolution video data. The transformation mode information indicates (A) the first mode indicating that pixels should be interpolated using the pixels that exist around there in term of time or space, (B) the second mode indicating that the addition information includes a forward motion vector, (C) the third mode indicating that the addition information includes a backward motion vector, and (D) the fourth mode indicating that the addition information includes a plurality of motion vectors. Modes except the first mode indicate that the resolution of video data should be improved by obtaining partial images from the images whose resolutions have already been improved based on motion vectors. A conversion mode is selected in a unit of a macro block and the like in order to realize low processing amount and high image quality in the decoding apparatus 2.

Also, the decoding apparatus 2 comprises a decoding device 200 and a high-resolution realizing unit 202 as shown in FIG. 1. A device used as the decoding device 2 is, for example, a computer ex111, a TV ex401, an STB ex407 and the like that can display high-resolution images.

The decoding device 200 comprises a decoding unit 201 and decodes the low-resolution video stream LVS. The decoding unit 201 corresponds to the coding unit 101, and performs decoding by, for example, MPEG 1, 2, 4, 4AVC and the like. The low-resolution video stream LVS after decoding is outputted as the low-resolution video data LV2. A device used as the decoding device 200 is, for example, a computer ex111, a PDA ex112, a mobile phone ex114, a mobile phone ex115, a digital camera ex116, a DVD recorder ex420 and the like that have a display screen for low-resolution images or selectively displays low-resolution images.

The high-resolution realizing unit 202 converts the resolution of the low-resolution video data LV2 into the high-resolution video data HV2 based on the addition information AI.

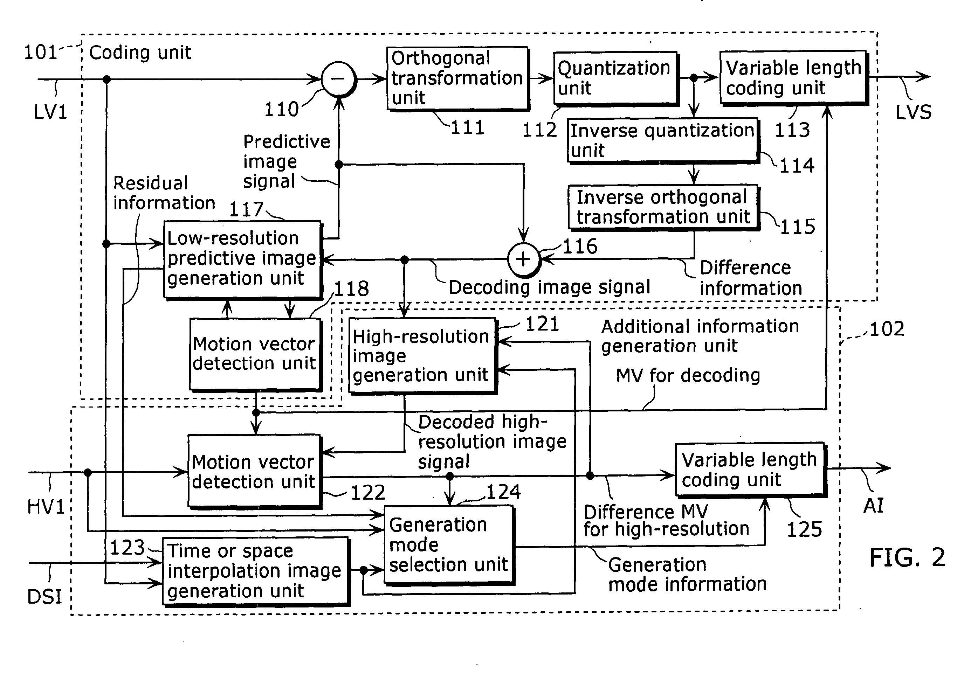

FIG. 2 is a block diagram indicating the detailed structure of the coding unit 101 and the addition information generation unit 102. The coding unit 101 comprises a subtractor 110, an orthogonal transformation unit 111, a quantization unit 112, a variable length coding unit 113, an inverse quantization unit 114, an inverse conversion unit 115, an adder 116, a predictive image generation unit 117 and a motion vector detection unit 118. This coding unit 101 may be structured based on a conventional technique such as MPEG 1, 2, 4, 4AVC and the like, and a detailed explanation on it will be omitted.

The addition information generation unit 102 comprises a high-resolution image generation unit 121, a motion vector detection unit 122, a time or space interpolation image generation unit 123, a generation mode selection unit 124 and a variable length coding unit 125.

The high-resolution image generation unit 121 has an internal memory that stores images whose resolutions have already been improved, and the resolution of the low-resolution video data that has been locally decoded in the coding unit 101 is improved (the above-mentioned second to fourth modes) by obtaining partial images from the images whose resolution have already been improved stored in the internal memory based on the motion vectors detected by the motion vector detection unit 122. This improvement of the resolution is performed in the second to fourth modes of the above-mentioned (B) to (D). Also, this improvement of the resolution is used for local decoding performed inside the addition information generation unit 102. And this high-resolution image used for estimating the accuracy of the resolution improvement and the generation coding amount so as to select a generation mode.

The motion vector detection unit 122 detects motion vectors from the high-resolution video data HV1. For example, in the case where the generation mode selected by the generation mode selection unit is the second mode, the motion vector detection unit 122 detects motion vectors regarding a forward image as a searching target out of the images whose resolutions have already been improved. Likewise, in the case of the third mode, motion vectors are detected regarding a backward image as a searching target, and also in the case of the fourth mode, forward and backward motion vectors are detected or a plurality of motion vectors in the same direction are detected.

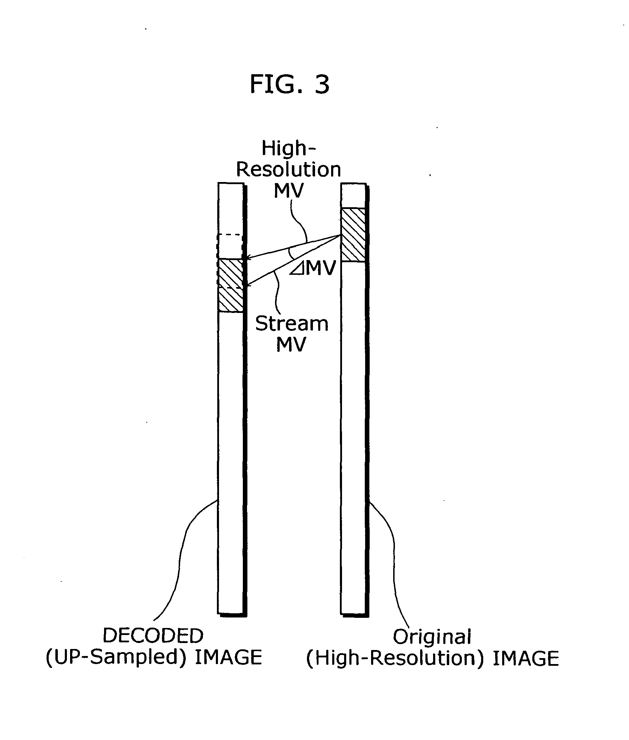

FIG. 3 is an illustration of a difference motion vector. The original image in the figure is a present input image included in the high-resolution video data, and the decoded image is an image whose resolution has already been improved. The hatched part in the original image is a block, in an input image, where motion vectors are detected. The part enclosed by a broken line in the decoded image is a part of the image similar to or the same as the block searched from the image whose resolution has already been improved. In other words, the high-resolution motion vector in the figure shows a motion vector detected by the motion vector detection unit 122.

Also, the hatched part in the decoded image is the area of the partial image detected by the motion vector detection unit 118 in the corresponding low-resolution image. The stream motion vector in the figure shows a motion vector detected from the low-resolution image by the motion vector detection unit 118. Note that sizes of the high-resolution motion vector and the stream motion vector are made to be the same by scaling in the figure.

The variable length coding unit 125 codes a difference motion vector between the high-resolution motion vector and the stream motion vector. This makes it possible to reduce the coding amount of the motion information. As shown in FIG. 3, the high-resolution motion vector takes an approximately the same value as the one taken by and the stream motion vector, but the high-resolution motion vectors can represent the motions more accurately.

The time or space interpolation image generation unit 123 generates high-resolution images by interpolating pixels using pixels that exist around there in term of time or space. This improvement of the resolution is mainly executed in the first mode of the above-mentioned (A).

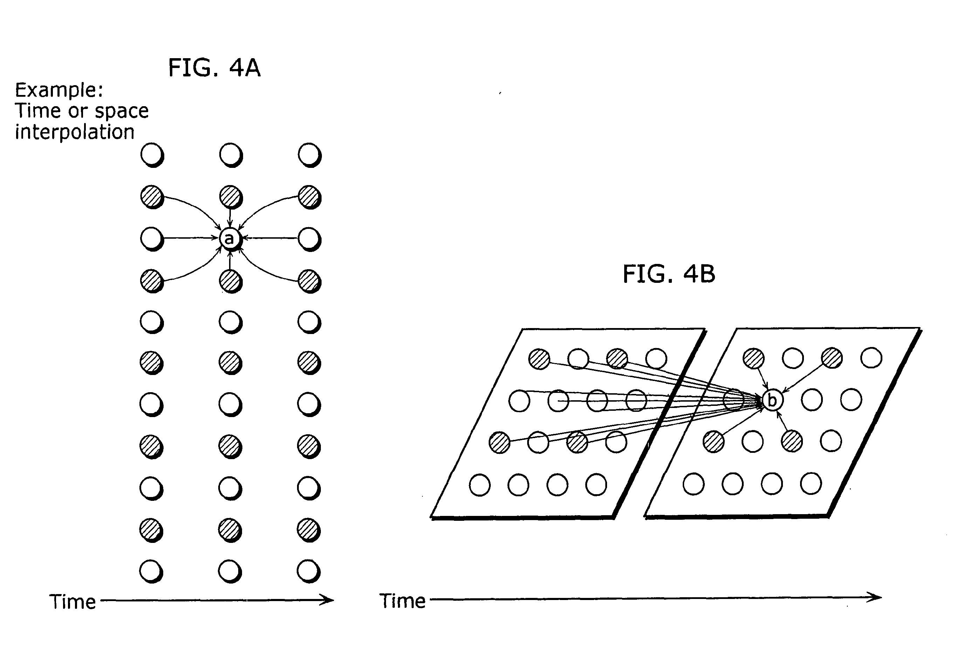

FIG. 4A and 4B are illustrations of showing how to generate the high-resolution image with double pixels both in the horizontal direction and in the vertical direction by the time or space interpolation. In the FIG. 4A, circles aligned vertically show pixels in a single image. The figure shows pixels of three images that are at different time. Hatched circles show pixels of low-resolution images while the not-hatched circles show pixels to be interpolated of high-resolution images. For example, in the case of generating pixels shown in FIG. 4A in time or space pixel interpolation, interpolation is performed using neighboring pixels as shown in the figure. At this time, pixels in the image of a different time whose resolution has already been improved may be used. Note that any information on pixels may be used as long as they are the pixels neighboring in term of time or space. FIG. 4B shows two images. Likewise, for example, in the case where pixels shown in FIG. 4B are generated by time or space interpolation, the interpolation is performed using the pixels neighboring in term of time or space.

As shown above, the time or space interpolation generation unit 123 interpolates pixels by filtering a plurality of pixels that exist around there in term of time or space.

The generation mode selection unit 124 selects a generation mode (the above-mentioned conversion mode) of the high-resolution images. As to a selection standard, for example, the above-mentioned (A) to (D) may be selected in association with the four coding modes (a) to (d) in the coding unit 101 first, or, after the accuracy of the high-resolution images or the generation coding amount are estimated, they may be selected according to the estimation result. The four coding modes in the coding unit 101 are modes of (a) an intra coding mode, (b) a forward predictive coding mode, (c) a backward predictive coding mode and (d) a bi-prediction coding mode.

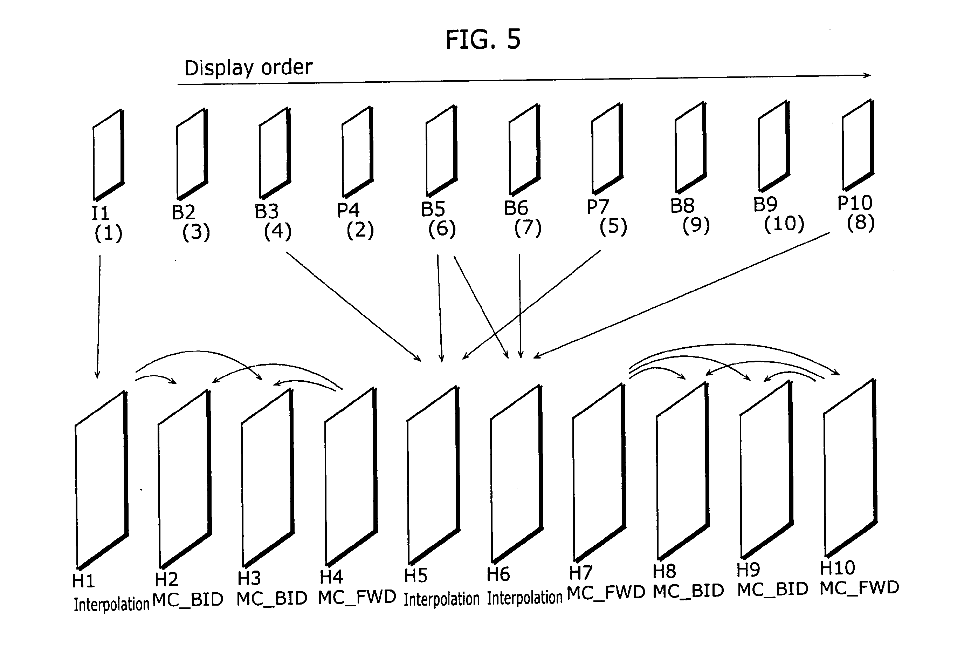

FIG. 5 is a diagram showing the relation between the low-resolution image and the high-resolution image. I1, B2, B3 and the like in the upper column show the low-resolution images in a display order. "I" shows an intra coding picture of the above-mentioned (a). "P" shows a single direction predictive coding picture of the above-mentioned (b) or (c). "B" shows a bi-prediction coding picture of the above-mentioned (d). Numbers aside the I, Bs and Ps show display orders. Note that numbers in parentheses indicate the coding order.

H1, H2, H3 and the like in the lower column of the figure show the high-resolution images corresponding to the low-resolution images. In the example of the figure, resolutions of H1, H5 and H6 pictures are improved by the time or space interpolation of the first mode. Resolutions of H2, H3, H8 and H9 pictures are improved by time or space interpolation in the above-mentioned (A) mode, or by obtaining partial image from other pictures whose resolutions have already been improved according to one of (B) to (D) modes. Resolutions of H4, H7 and H10 pictures are improved by time or space interpolation in the above-mentioned (A) mode or by obtaining partial image from forward pictures whose resolutions have already been improved based on the above-mentioned (B) motion vectors. Note that a different mode may be employed for each block in a picture.

The variable length coding unit 125 performs variable length coding of the conversion mode information indicating the first mode as addition information in the case where the generation mode selected by the generation mode selection unit 124 (the above-mentioned conversion mode) is the first mode, while it performs variable length coding of the conversion mode information and the motion information as addition information in the case where the selected generation mode is one of the second to fourth modes. At that time, the variable length coding unit 125 performs variable length coding of the motion information as a difference motion vector.

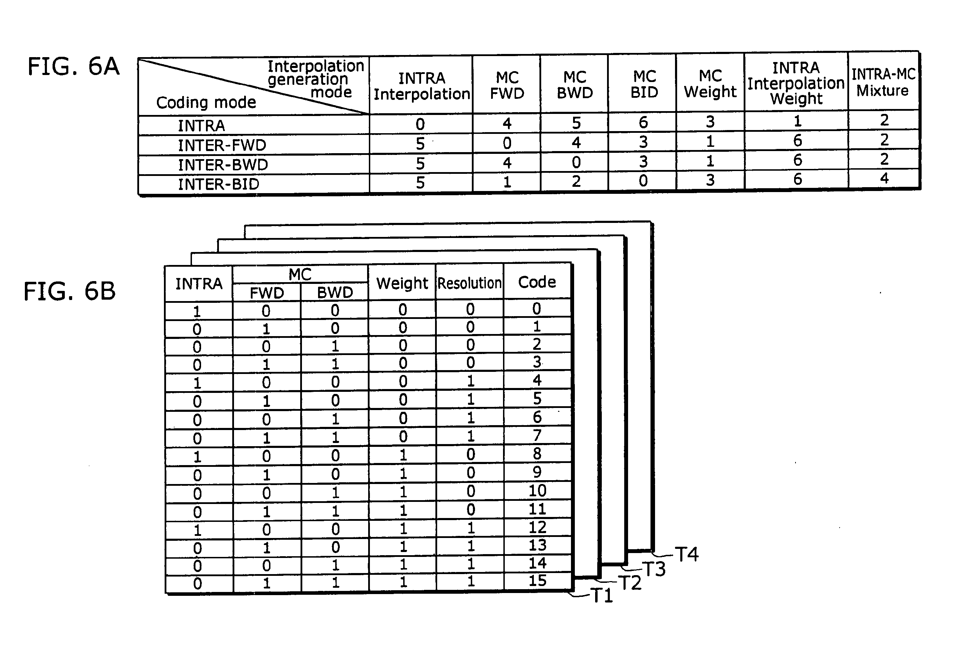

FIG. 6A and 6B are illustrations indicating codes of the generation mode.

In FIG. 6A, the coding mode columns show the coding modes of low-resolution images. In other words, "INTRA" shows the above-mentioned (a), "INTER-FWD" shows the above-mentioned (b), "INTER-BWD" shows the above-mentioned (c) and "INTER-BID" shows the above-mentioned (d).

The interpolation generation mode columns show generation modes (transformation modes) of the corresponding high-resolution images. In other words, "INTRA interpolation" shows the above-mentioned (A), "MCFWD" shows the above-mentioned (B), "MCBWD" shows the above-mentioned (C) and "MCBID" shows the above-mentioned (D). Also, "MCWeight" shows generating high-resolution images based on a linear prediction with weighing using a plurality of images whose resolutions have already been improved in the case of the above-mentioned (D). "INTRA interpolation Weight" shows generating high-resolution images by filtering with weighing using a plurality of images whose resolutions have already been improved in the case of the above-mentioned (A). "INTRA-MC Mixture" shows generating high-resolution images mixing the above-mentioned (A) with one of the above-mentioned (B) to (D).

In the example of FIG. 6A, codes of the generation modes are assigned in association with the coding modes of blocks of the low-resolution images corresponding to the blocks of the high-resolution images. In other words, a code of the generation mode is assigned in a way that it becomes "0" in the case where the coding mode and the generation mode are of a kind. Say, focus on the column of the generation mode "MCBID". On condition that the generation mode of the block including a high-resolution image is "MCBID", in the case where the coding modes of the corresponding blocks including low-resolution images are "INTER-BID", "INTER-BWD", "INTER-FWD" and "INTRA", the codes of the blocks including high-resolution images are "0", "3", "3" and "6" respectively.

FIG. 6B is, to be more specific, a diagram showing a variable length coding table of the generation mode.

Table T1 in FIG. 6B shows the variable length coding table in the case where the coding mode is the above-mentioned (A). Likewise, table T2, T3 and T4 show the variable length coding table in the case where the coding mode is the above-mentioned (b), (c) and (d). For example, in the case where the coding mode is the above-mentioned (a) intra coding and the generation mode is the above-mentioned (A) time or space interpolation, the generation mode code is "0". Also, in the case where the coding mode is the above-mentioned (a) intra coding and the generation mode is the above-mentioned (B) forward motion vectors, the generation mode code is "1". In this table T1 to T4, a smaller number is assigned in the case where the coding mode and the generation mode are of a kind.

Note that coding in the generation mode is not limited to this. For example, the coding in the generation mode may be the coding method (so-called arithmetic coding) using probability of generation codes.

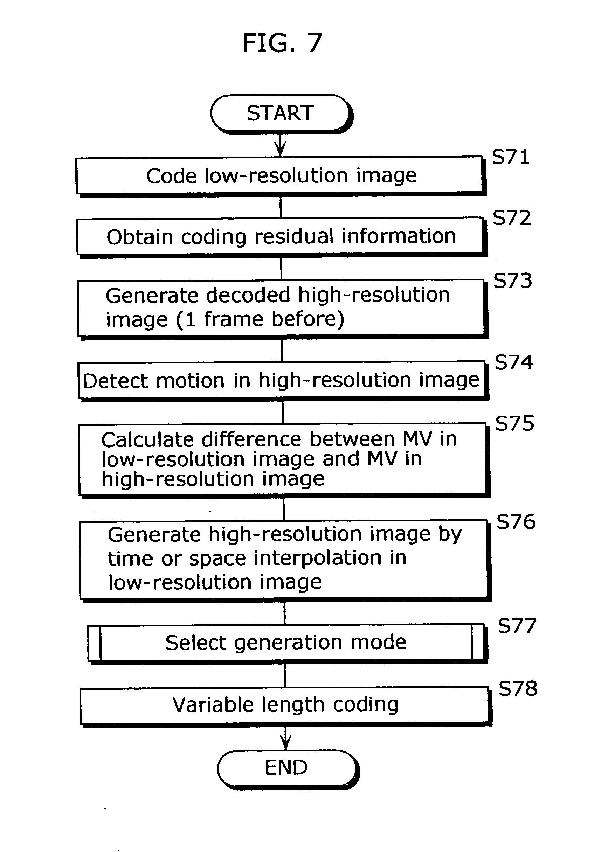

FIG. 7 is a flow chart showing the image coding processing and the addition information generation processing in the coding unit 101 and the addition information generation unit 102.

As shown in the figure, the coding unit 101 performs coding block by block, to be more specific, macro block by macro block (S71), and the generation mode selection unit 124 obtains a coding residual of the macro block from the variable length coding unit 113 (S72). At this time, a locally decoded picture with low-resolution image is stored in a reference memory in the prediction image generation unit 117.

On the other hand, the high-resolution image generation unit 121 and time or space interpolation image generation unit 123 generate high-resolution images corresponding to the low-resolution images coded one frame before or immediately before (S73), the motion vector detection unit 122 detects motion vectors of images of the high-resolution video data HV1 newly inputted regarding the generated high-resolution image as a searching target (S74) and calculates a difference motion vectors between the detected motion vectors and the motion vectors of the high-resolution images (S75). The time or space interpolation image generation unit 123 generates high-resolution images from the corresponding low-resolution images by interpolating based on time or space interpolation (S76).

In addition, the generation mode selection unit 124 selects an optimum generation mode based on the coding residuals and the motion vectors (S77). The variable length coding unit 125 performs variable length coding on the addition information (S78). In other words, the variable length coding unit 125 codes the selected generation mode and also difference motion vectors in the case where the selected generation mode is one of the second to fourth modes.

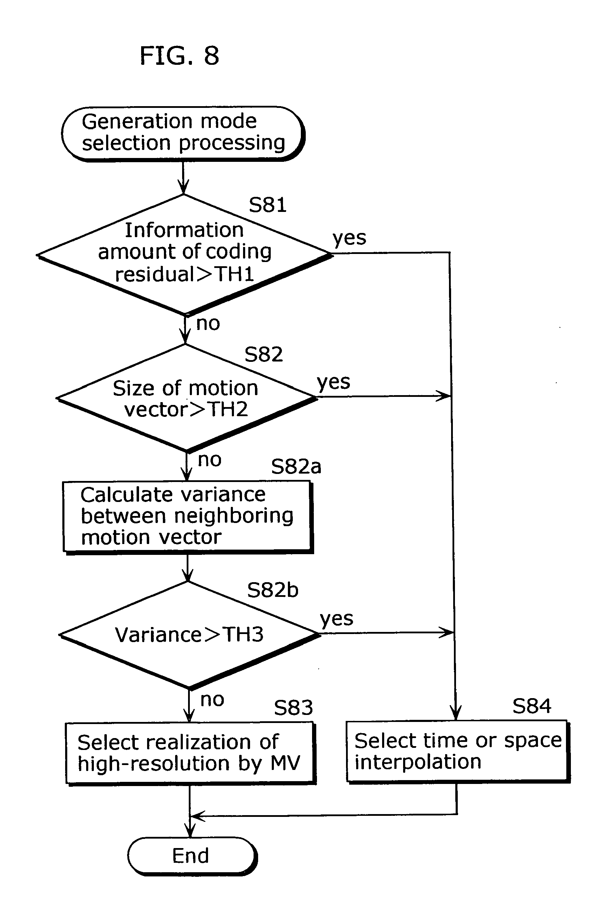

FIG. 8 is a flow chart showing the generation mode selection processing in S77 shown in FIG. 7.

The generation mode selection unit 124 selects (S83) a mode corresponding to the coding mode, as a generation mode, from the first to fourth modes that are the above-mentioned (B) to (D) modes where a resolution is improved based on motion vectors in the case where the amount of the coding residual information obtained in S72 is smaller than a threshold TH1 in the case where the motion vectors detected in S74 or motion vectors detected by the motion vector detection unit 118 is smaller than the threshold TH2.

Also, the generation mode selection unit 124 selects (S84) the first mode, that is the improvement based on the above-mentioned (A) time or space interpolation, in the case where the amount of the coding residual information obtained in S72 is larger than the threshold Th1 or the motion vectors detected in S74 or the motion vectors detected by the motion vector detection unit 118 is larger than the threshold Th2.

This generation mode selection processing avoids the increase in coding amount by generating the first mode as the generation mode in the case where motions between high-resolution images and low-resolution images are big. Also, as erroneous motion vectors may be detected in the case where motion vectors are not in a correlation with their neighboring motion vectors, the generation mode selection unit 124 selects the first mode (realizing high resolution by the above-mentioned (A) time or space pixel interpolation) as a generation mode. To be more specific, the generation mode selection unit 124 calculates the variance of a motion vector and its neighboring motion vectors (S82a) and selects the first mode (S84) in the case where the value is bigger than the threshold (S82b).

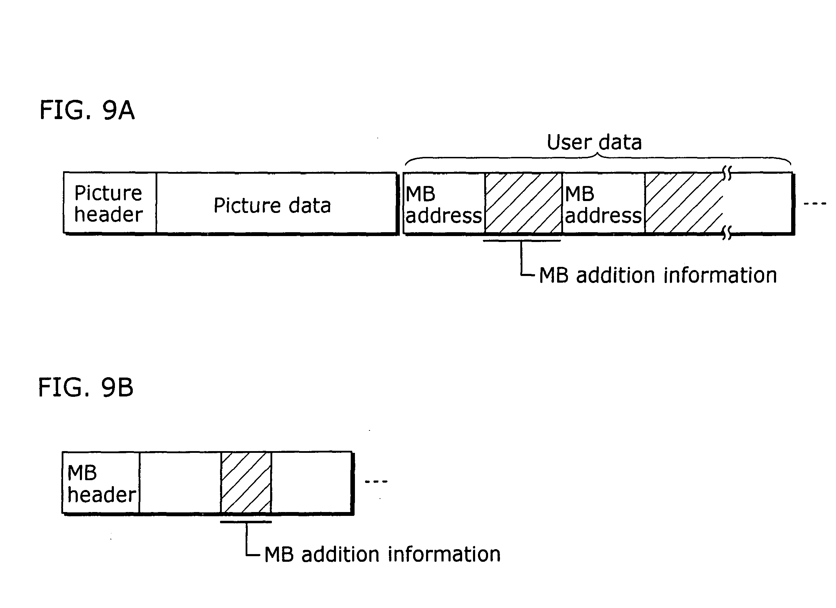

FIG. 9A and 9B are illustrations indicating an example of a stream format of the addition information associated with the stream data by the variable length coding unit 125.

FIG. 9A shows an example of a format to which addition information is added picture by picture as user data. In other words, the addition information generated macro block by macro block is added, as user data, to the part of stream data comprising a picture header and picture data. This user data is data that may be arbitrary placed in a stream by the user.

FIG. 9B shows a format example where the output unit adds addition information to the stream data. In FIG. 9B, addition information generated macro block by macro block is included in the macro block data. In the figure, data amount can be reduced because no macro block address is necessary unlike the case of FIG. 9A.

Note that another example format may have the structure for substantially embedding addition information in stream data by using an information embedding technique such as an electronic watermarking technique, and transmitting the stream data. For example, the coding unit 101 may have the structure for obtaining the addition information from the addition information generation unit 102 and embedding the addition information in image data to be coded using an electronic watermarking technique and the like without detriment to the image quality of the resulting decoded image. Electronic watermarking techniques are, for example, a temporal embedding method, a spatial embedding method, an embedding method using a layer function, a wavelet transform and a spectrum spread.

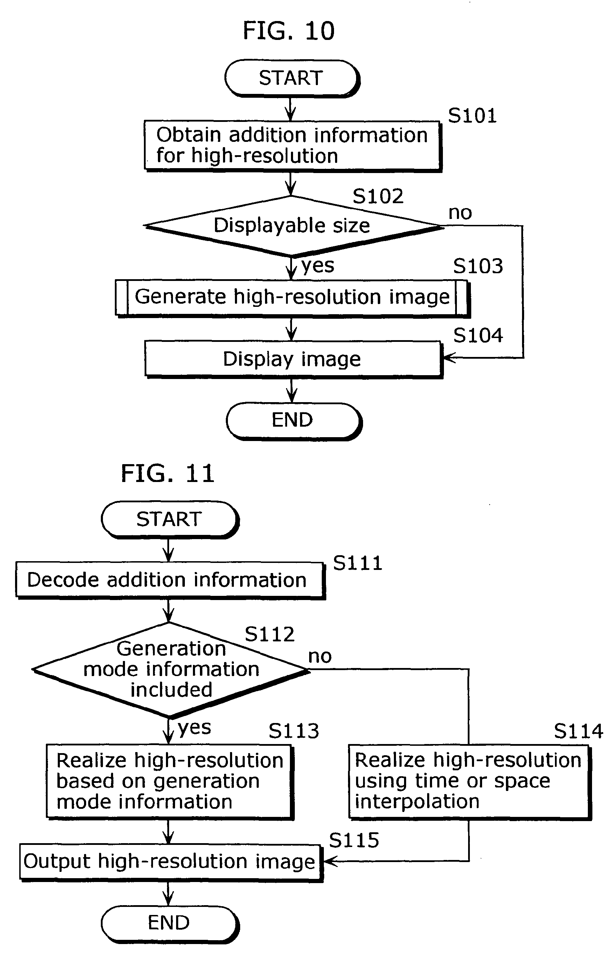

FIG. 10 is a flow chart showing decoding processing in the decoding apparatus 2.

The decoding apparatus 2, on obtaining the addition information (S101), judges whether the image can be displayed on the connected display screen (S102) or not. In the case where it cannot be displayed, the decoding apparatus 2 outputs the low-resolution video data LV2 decoded by the decoding unit 201 for display (S104). Also, in the case where it can be displayed, the decoding apparatus 2 generates a high-resolution image from a low-resolution video data LV2 decoded by the decoding unit 201 (S103) and outputs it on the display screen (S104).

FIG. 11 is a flow chart showing the high-resolution image generation processing in S103 in FIG. 10.

The high-resolution realizing unit 202 performs variable length decoding on the addition information (S111), judges whether the generation mode information, that is transformation mode information, is included in the addition information or not (S112). The high-resolution realizing unit 202 generates high-resolution images according to the generation mode information in the case where the generation mode information is included (S113), while it generates high-resolution images based on time or space interpolation in the case where no generation mode information is included (S114). After that, it outputs the generated high-resolution image (S115).

Note that this high-resolution image generation processing is performed macro block by macro block in the case where, for example, the addition information is added macro block by macro block, while it is performed picture by picture in the case where the addition information is added picture by picture.

Also, the variable length coding unit 125 may temporally input low-resolution image bit stream LVS from the variable length coding unit 113 and output it and the addition information that are associated with each other.

As explained up to this point, with the image coding apparatus and the image decoding apparatus in this embodiment, it is possible to generate high-resolution images from low-resolution images to realize low processing amount and high image quality.

(Variation 1 of the First Embodiment)

The following variation may be made within the practical range of the first embodiment.

The addition information generation unit 102 with the high-resolution image generation unit 121 in FIG. 2 may be the addition information generation unit 102 without the high-resolution image generation unit 121, the latter structure being for inputting the high-resolution image signal HV1, which was shot at the same time as the decoded high-resolution image signal, in the motion vector detection unit 122 as a searching target. In the motion detection unit 122, motion vectors in a high-resolution image are detected from the high-resolution image signal HV1 and difference vectors for the high-resolution image are generated. By doing this, it is possible to simplify the structure of the coding apparatus 1, and thus low processing amount can be realized.

Also, the addition information generation unit 102 with the high-resolution image generation unit 121 in FIG. 2 may be the addition information generation unit 102 without the high-resolution image generation unit 121, the latter structure being for inputting the high-resolution image signal HV2 from the high-resolution realizing unit 202, which was shot at the same time as the decoded high-resolution image signal, in the motion vector detection unit 122 as a searching target. In the motion detection unit 122, motion vectors in a high-resolution image are detected from the high-resolution image signal HV1 and a high-resolution image signal HV2, and difference vectors for the high-resolution image are generated.

Note that it is possible to keep and use the high-resolution image generation unit 121 for selecting generation modes. By doing like this, it becomes possible to reduce the amount in high-resolution image realizing processing of a decoded image one frame before.

(Second Embodiment)

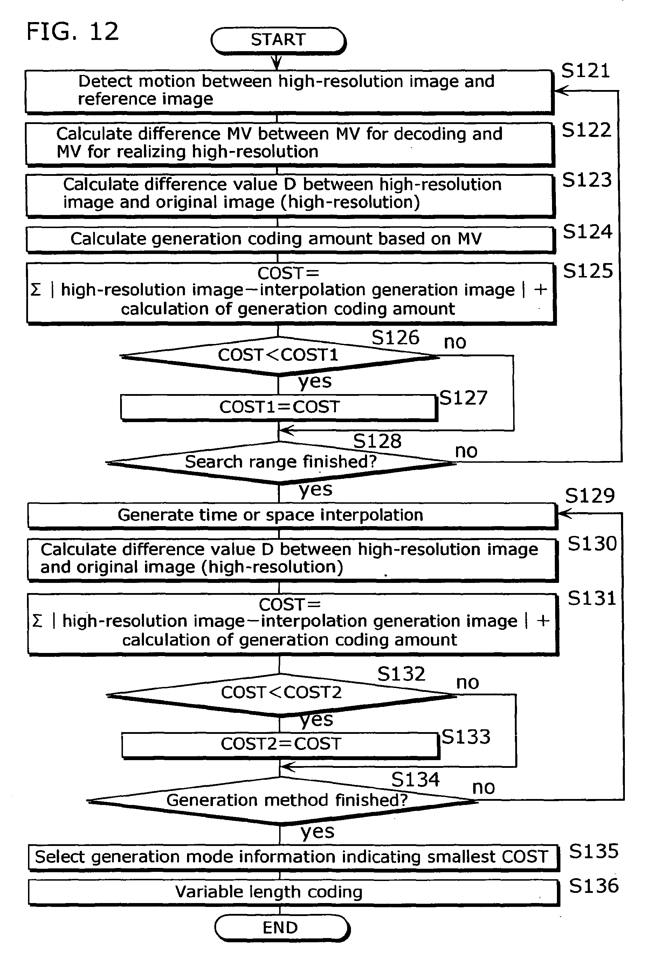

FIG. 12 is a flow chart showing another example of image coding processing in the second embodiment. The processing shown in FIG. 12 is performed instead of the one shown in FIG. 7 or FIG. 8 in the first embodiment.

In FIG. 12, the motion vector detection unit 122 detects(S121) motion vectors with reference to an image whose resolution has already been improved in the high-resolution image generation unit 121 from the original image (high-resolution image HV1) and calculates difference motion vectors between the detected motion vectors and the motion vectors detected by the motion vector detection unit 118 (S122). The generation mode selection unit 124 calculates (S123) the difference value Ds between the high-resolution image generated based on the difference motionvectors by the high-resolution image generation unit 121 and the original (high-resolution image HV1), calculates the generation coding amount in the case where the difference motion vectors are coded as addition information (S124), and then calculates COST shown as the following expression (S125).

$$\text{COST} = \Sigma \,|\, \text{high-resolution image} - \text{interpolation generation image}\,| + \text{generation coding amount}$$

$\Sigma\,|\,$high-resolution image $-$ interpolation generation image$\,|$ in the expression is the total of the difference value Ds calculated in S123 and means the total of pixel value differences, which are calculated block by block based on the difference motion vectors, between the ones of the high-resolution image and the ones of the interpolation generation image. The case where this value is "0" means that the interpolation generation image matches the original image, which means that the image quality of the interpolation generation image is the highest. In contrast, the greater this value is, the greater the difference between the interpolation generation image and the original image is. This means that the improvement of the resolution is not accurate and the image quality of the interpolation generation image is bad. The generation coding amount is the one calculated in S124. The case where the generation coding amount is small means that the coding efficiency of the low-resolution image bit stream LVS is not affected so badly, while the case where the generation coding amount is big means that the coding efficiency of the low-resolution image bit stream LVS is affected. The case where the above-mentioned value of COST is big means that at least one of the image quality of the high-resolution image and the coding efficiency is bad. In contrast, the smaller the value of COST is, the higher both of the image quality of the high-resolution image and the coding efficiency are.

In addition, the generation mode selection unit 124 compares the calculated COST with COST1 (S126), and updates the value of COST1 so that it becomes equal to the value of COST in the case where the value of COST is smaller than the value of COST1 (S127).

Here, the initial value of the COST1 is the threshold of the COST which should not exceed the initial value, and the COST1 is repeatedly updated so that it nears to the minimum COST in the loop processing until motion vectors in a search range are searched (S128). Note that the generation mode selection unit 124 in S128 judges whether the search range has already been searched or not in S128, but whether several generation modes are performed or not in generation modes (the second to fourth modes) similar to the coding modes may be judged.

As explained above, the generation mode selection unit 124 can obtain motion vectors or a generation mode that realizes the minimum COST1 as to the high-resolution image generated based on the difference motion vectors.

Also, the time or space interpolation image generation unit 123 generates an interpolation image based on the time or space interpolation (S129), and the generation mode selection unit 124 calculates the difference value D between the generated interpolation image and the original image (high-resolution image HV1) (S130), and then calculates the COST (S131). Further, the generation mode selection unit 124 compares the calculated COST with the COST2 (S132) and updates the value of the COST2 so that it becomes equal to the value of COST in the case where the value of the COST is smaller than the value of the COST2 (S133). Here, the initial value of the COST2 is threshold of the COST which should not exceed the initial value and it may be the same value as the initial value of the COST1. The COST2 is repeatedly updated so that it nears to the minimum value of the COST in the loop processing until the generation method based on interpolation of motion vectors is finished (S134). Note that the generation mode selection unit 124 judges whether the generation method based on interpolation is finished or not in S134, but this judgment may be made as to whether the trial of the generation method is finished or not changing the types or toughness of filters used for the interpolation. The types or toughness of filters used for the interpolation may be selected according to the down sampling information DSI.

In the above-mentioned way, the generation mode selection unit 124 can obtain a generation mode that realizes the minimum COST2 as to the high-resolution image generated by the time or space interpolation.

Next, the generation mode selection unit 124 selects a generation mode corresponding to the smaller one of COST1 and COST2 (S135). The variable length coding unit 125 codes generation mode information indicating the selected generation mode (S136).

In this way, COST serves as a standard for calculating the badness in image quality of a high-resolution image and the deterioration in coding efficiency of a low-resolution image caused by adding addition information. The generation mode selection unit 124 in this embodiment calculates the COSTs in various generation modes, and it is structured in a way that it selects the generation mode that realizes the minimum COST. As a result, it becomes possible to not only improve the image quality of the high-resolution image but also minimize the deterioration in coding efficiency caused by adding addition information.

(Third Embodiment)

In addition, storing the coding and decoding program or coded stream (data stream) for realizing the structures of the coding and decoding processing shown in each of the above-mentioned embodiments in a recording medium such as a flexible disc makes it possible to easily perform the processing shown in each of the above-mentioned embodiments in an independent computer system.

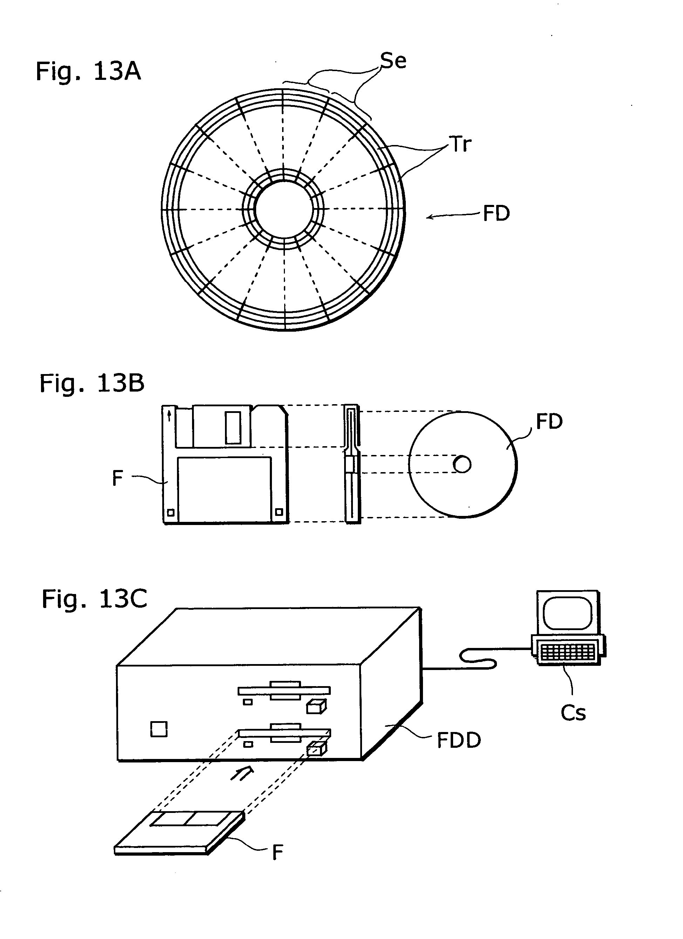

FIG. 13A and 13C are illustrations for explaining the case where the coding processing or the decoding processing in the above mentioned first to second embodiments are executed in a computer system using a flexible disc storing the coding program and the decoding program. FIG. 13B shows a flexible disc and the front view and the cross-sectional view of the appearance of the flexible disc. FIG. 13A shows an example of a physical format of a flexible disc as a recording medium body. A flexible disc (FD) is contained in a case F, a plurality of tracks (Tr) are formed concentrically on the surface of the disc from the periphery into the inner radius of the disc, and each track is divided into 16 sectors (Se) in the angular direction. Therefore, in the case of the flexible disc storing the above-mentioned program, data as the program is recorded in an area allocated for it on the flexible disc (FD).

Also, FIG. 13C shows the structure for recording and reading out the program on the flexible disc (FD). When the program is recorded on the flexible disc (FD), the computer system (Cs) writes data as a program in a computer system Cs via a flexible disc drive. When the coding method and the decoding method mentioned above are constructed in the computer system by the program on the flexible disc, the program is read out from the flexible disc through a flexible disc drive and transferred to the computer system. Note that the recording medium is not limited to a flexible disc, and a medium for recording the program such as an IC card, a ROM cassette and the like can also be used.

Also, the coding method and the decoding method shown in the above-mentioned embodiments can be realized in a form of a semiconductor such as an LSI, in a mobile communication apparatus such as a mobile phone, a car navigation system and the like or an image shooting apparatus such as a digital video camera, a digital steel camera and the like. Also, the coding and the decoding methods can be performed by three types of terminals: a send/receive terminal implemented with both an image coding apparatus and an image decoding apparatus, a send terminal implemented with an image coding apparatus only, and a receive terminal implemented with an image decoding apparatus only, and a receive terminal implemented with an image decoding apparatus only.

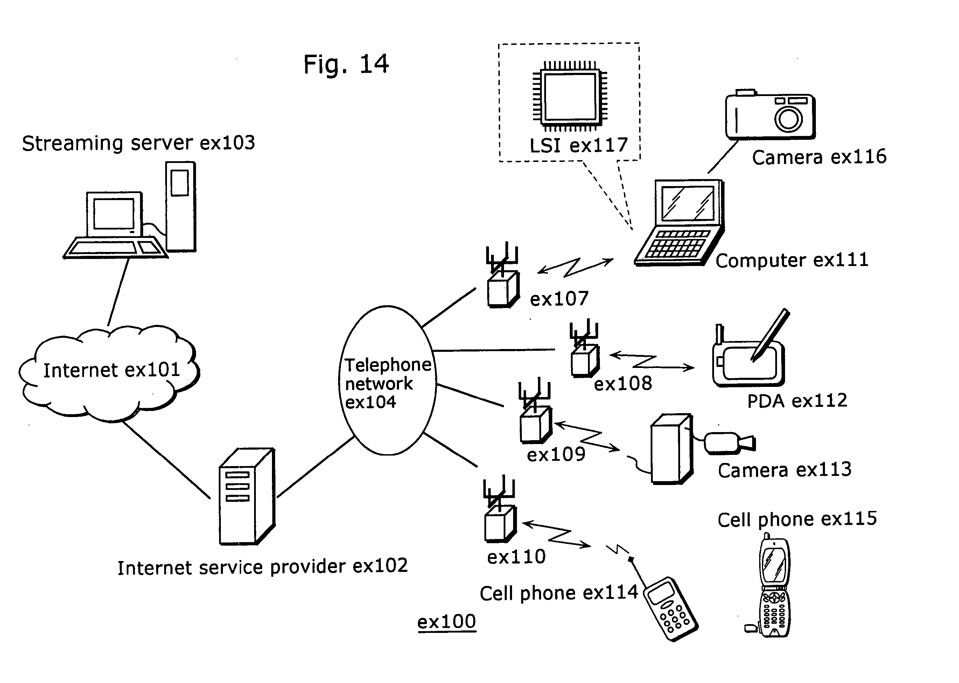

FIG. 14 is a block diagram showing the overall configuration of a content supply system ex100 for realizing content distribution service. The area for providing communication service is divided into cells of desired sizes, and cell sites ex107 to ex110 of fixed wireless stations are placed in the respective cells.

This content supply system ex100 is connected to each apparatus such as a computer ex111, a Personal Digital Assistant (PDA) ex112, a camera ex113, a cellular phone ex114 and a cellular phone with a camera ex115 via, for example, a combination of the Internet ex101, an Internet service provider ex102, a telephone network ex104 and cell sites ex107 to ex110.

However, the content supply system ex100 is not limited to the configuration as shown in FIG. 14, and may be connected to a combination of any of them. Also, each apparatus can be connected directly to the telephone network ex104, not through the cell sites as fixed radio stations ex107 to ex110.

The camera ex113 is an apparatus capable of shooting video (moving pictures) such as a digital video camera. The cell phone can be a cell phone of a Personal Digital Communications (PDC) system, a Code Division Multiple Access (CDMA) system, a Wideband-Code Division Multiple Access (W-CDMA) system or a Global System for Mobile Communications (GSM) system, a Personal Handy-phone system (PHS) or the like.

A streaming server ex103 is connected to the camera ex113 via the cell site ex109 and the telephone network ex104, which enables live distribution or the like using the camera ex113 based on the coded data transmitted from the user. Either the camera ex113 or the server for transmitting the data can code the shot data. Also, the moving picture data shot by a camera ex116 can be transmitted to the streaming server ex103 via the computer ex111. The camera ex116 is an apparatus capable of shooting still and moving pictures such as a digital camera. In this case, either the camera ex116 or the computer ex111 can code the moving picture data. An LSI ex117 included in the computer ex111 or the camera ex116 performs coding processing. Software for coding and decoding images can be integrated into any type of storage medium (such as a CD-ROM, a flexible disc, a hard disc and the like) that is a recording medium which is readable by the computer ex111 or the like. Furthermore, a cellular phone with a camera ex115 can transmit the moving picture data. This moving picture data is the data coded by the LSI included in the cellular phone ex115.

The contents supply system ex100 codes contents (such as a music live video) shot by users using the camera ex113, the camera ex116 or the like in the same manner as the above-mentioned embodiments and transmits them to the streaming server ex103, while the streaming server ex103 generates stream distribution of the contents data to the clients upon their request. The clients include the computer ex111, the PDA ex112, the camera ex113, the cellular phone ex114 and so on that are capable of decoding the above-mentioned coded data. In this way, the contents supply system ex100 enables the clients to receive and reproduce the coded data, and further to receive, decode and reproduce the data in real time so as to realize personal broadcasting.

When each apparatus in this system performs coding or decoding, the image coding apparatus or the image decoding apparatus can be used, as shown in the above-mentioned embodiments.

A cellular phone will be explained as an example of the apparatus.

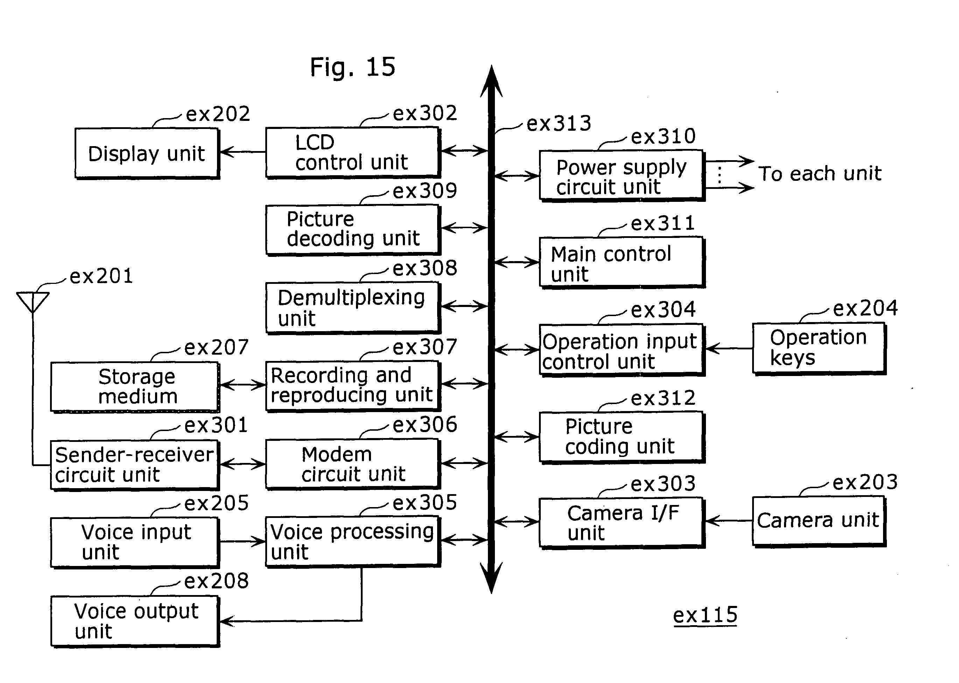

FIG. 15 is a diagram showing the cellular phone ex115 using the image coding apparatus and the image decoding apparatus explained in the above-mentioned embodiments. The cellular phone ex115 has an antenna ex201 for communicating with the cell site ex110 via radio waves, a camera unit ex203 capable of shooting moving and still pictures such as a CCD camera images shot by the camera unit ex203, a display unit ex202 such as moving pictures shot by the camera unit ex203, display unit ex202 such as a liquid crystal display for displaying the data obtained by decoding moving pictures and the like received by the antenna ex201, a body unit including a set of operation keys ex204, a voice output unit ex208 such as a speaker for outputting voices, a voice input unit 205 such as a microphone for inputting voices, a storage medium ex207 for storing coded or decoded data such as data of moving or still pictures shot by the camera, data of received e-mail and data of moving or still pictures, and a slot unit ex206 operable to attach the storage medium ex207 to the cellular phone ex115. The storage medium ex207 is equipped with a flash memory element, a kind of Electrically Erasable and Programmable Read Only Memory (EEPROM) that is an electrically erasable and rewritable nonvolatile memory, in a plastic case such as SD cards.

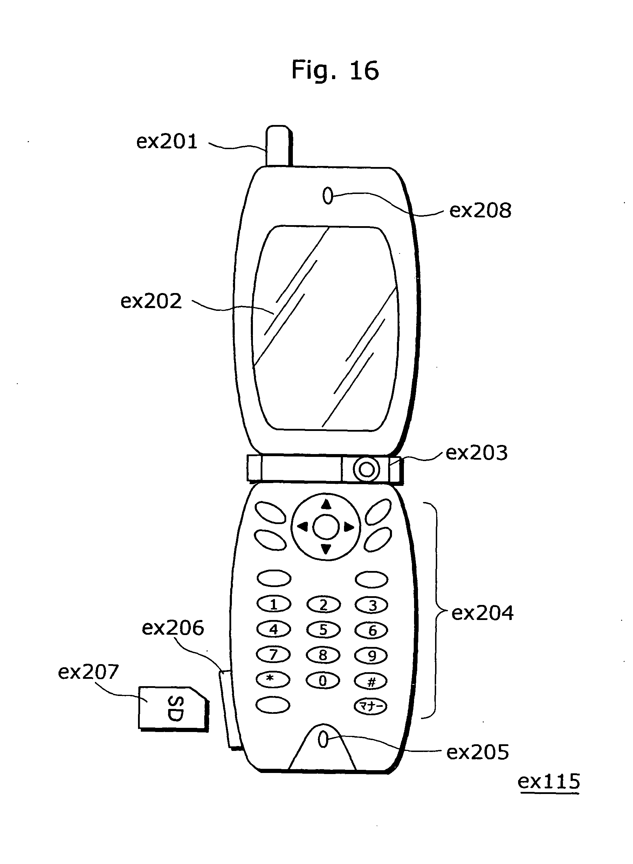

Next, the cellular phone ex115 will be explained with reference to FIG. 16. In the cellular phone ex115, a main control unit ex311, which is operable to perform centralized control on each unit of the body unit including the display unit ex202 and operation keys ex204, is connected to a power supply circuit unit ex310, an operation input control unit ex304, an image coding unit ex312, a camera interface unit ex303, a Liquid Crystal Display (LCD) control unit ex302, an image decoding unit ex309, a demultiplexing unit ex308, a recording and reproducing unit ex307, a modem circuit unit ex306 and a voice processing unit ex305 to each other via a synchronous bus ex313.

When a call-end key or a power key is turned ON by a user's operation, the power supply circuit unit ex310 supplies respective components with power from a battery pack so as to activate the digital cellular phone with a camera ex115 for generating it into a ready state.

In the cell phone ex115, the voice processing unit ex305 converts the voice signals received by the voice input unit ex205 in conversation mode into digital voice data under the control of the main control unit ex311 including a CPU, a ROM and a RAM, the modem circuit unit ex306 performs spread spectrum processing of the digital voice data, and the communication circuit unit ex301 performs digital-to-analog conversion and frequency transform of the data so as to transmit it via the antenna ex201. Also, in the cellular phone ex115, the communication circuit unit ex301 amplifies the data received by the antenna ex201 in conversation mode and performs frequency transform and analog-to-digital conversion for the data, the modem circuit unit ex306 performs inverse spread spectrum processing of the data, and the voice processing unit ex305 converts it into analog voice data so as to output it via the voice output unit ex208.

Furthermore, when transmitting e-mail in data communication mode, the text data of the e-mail inputted by operating the operation keys ex204 on the body unit is sent out to the main control unit ex311 via the operation input control unit ex304. In the main control unit ex311, after the modem circuit unit ex306 performs spread spectrum processing of the text data and the communication circuit unit ex301 performs digital-to-analog conversion and frequency conversion for it, the data is transmitted to the cell site ex110 via the antenna ex201.

When image data is transmitted in data communication mode, the image data shot by the camera unit ex203 is supplied to the image coding unit ex312 via the camera interface unit ex303. When the image data is not transmitted, it is also possible to display the image data shot by the camera unit ex203 directly on the display unit 202 via the camera interface unit ex303 and the LCD control unit ex302.

The image coding unit ex312, which includes the image coding apparatus as explained in the present invention, codes to compress the picture data supplied from the camera unit ex203 using the coding method used for the image coding apparatus as shown in the above-mentioned embodiments so as to transform it into coded image data, and sends it out to the demultiplexing unit ex308. At this time, the cellular phone ex115 sends out the voices received by the voice input unit ex205 during shooting by the camera unit ex203 to the demultiplexing unit ex308 as digital voice data via the voice processing unit ex305.

The demultiplexing unit ex308 multiplexes the coded image data supplied from the image coding unit ex312 and the voice data supplied from the voice processing unit ex305 using a predetermined method, the modem circuit unit ex306 performs spread spectrum processing on the multiplexed data obtained as a result of the multiplexing, and the communication circuit unit ex301 performs digital-to-analog conversion and frequency transform of the data for transmitting via the antenna ex201.

As for receiving data of a moving picture file which is linked to a Web page or the like in data communication mode, the modem circuit unit ex306 performs spread spectrum processing of the data received from the cell site ex110 via the antenna ex201, and sends out the multiplexed data obtained as a result of the processing to the demultiplexing unit ex308.

In order to decode the multiplexed data received via the antenna ex201, the demultiplexing unit ex308 separates the multiplexed data into a bit stream of image data and a bit stream of voice data, and supplies the current coded image data to the image decoding unit ex309 and the current voice data to the voice processing unit ex305 respectively via the synchronous bus ex313.

Next, the image decoding unit ex309, which includes the image decoding apparatus as explained in the above invention, decodes the bit stream of image data using the decoding method corresponding to the coding method as shown in the above-mentioned embodiments to generate reproduced moving image data, and supplies this data to the display unit ex202 via the LCD control unit ex302, and thus, for instance, the moving picture data included in a moving picture file linked to a Web page is displayed. At the same time, the voice processing unit ex305 converts the voice data into analog voice data, and supplies this data to the voice output unit ex208, and thus, for instance, voice data included in a moving picture file linked to a Web page is reproduced.

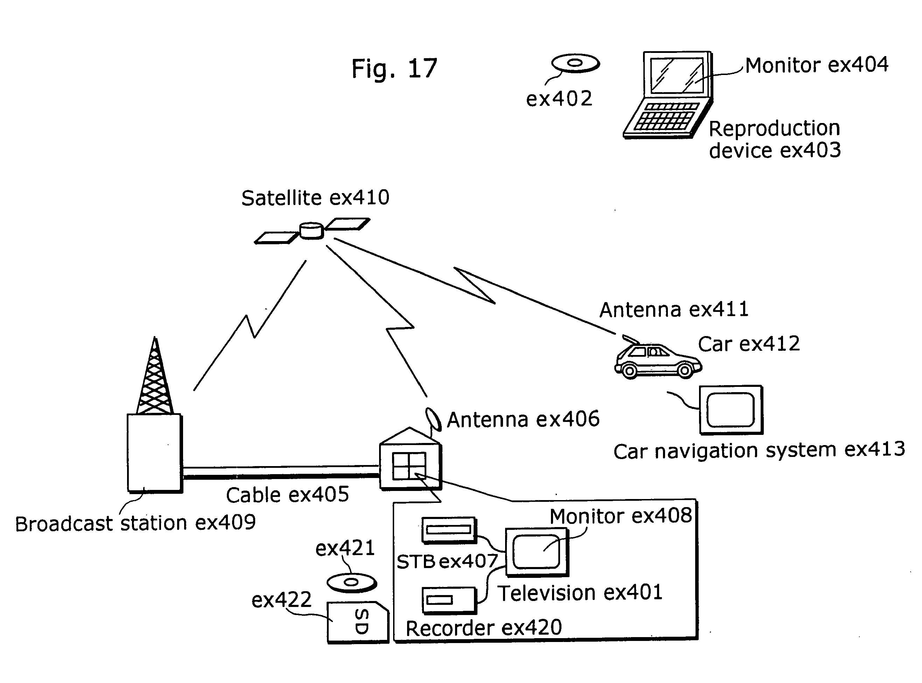

The present invention is not limited to the above-mentioned system, and at least either the image coding apparatus or the image decoding apparatus in the above-mentioned embodiments can be incorporated into a digital broadcasting system as shown in FIG. 17. Such ground-based or satellite digital broadcasting has been in the news lately. More specifically, a bit stream of video information is transmitted from a broadcast station ex409 to a communication or a broadcast satellite ex410 via radio waves. Upon receipt of it, the broadcast satellite ex410 transmits radio waves for broadcasting, a home-use antenna ex406 with a satellite broadcast reception function receives the radio waves, and a television (receiver) ex401, a set top box (STB) ex407 or the like decodes and reproduces the bit stream. The image decoding apparatus as shown in the above-mentioned embodiments can be implemented in the reproduction apparatus ex403 for reading out and decoding the bit stream recorded on a storage medium ex402 that is a recording medium such as a CD and a DVD. In this case, the reproduced video signals are displayed on a monitor ex404. It is also conceived to implement the image decoding apparatus in the set top box ex407 connected to a cable ex405 for a cable television or the antenna ex406 for satellite and/or ground-based broadcasting so as to reproduce them on a monitor ex408 of the television. The image coding apparatus may be incorporated into the television, in stead of in the set top box. Or, a car ex412 having an antenna ex411 can receive signals from the satellite ex410, the cell site ex107 or the like for reproducing moving pictures on a display apparatus such as a car navigation system ex413.

Furthermore, the image coding apparatus shown in the above-mentioned embodiments can code image signals for recording on a recording medium. As a concrete example, there is a recorder ex420 such as a DVD recorder for recording image signals on a DVD disc ex421 and a disc recorder for recording them on a hard disc. They can be recorded on an SD card ex422. If the recorder ex420 includes the image decoding apparatus shown in the above-mentioned embodiment, the image signals recorded on the DVD disc ex421 or the SD card ex422 can be reproduced for display on the monitor ex408.

Note that a conceivable configuration of the car navigation system ex413 is the configuration obtained by eliminating the camera unit ex203, the camera interface unit ex303 and the image coding unit ex312 from existing components in FIG. 16. The same goes for the computer ex111, the television (receiver) ex401 and the like.

In addition, three types of implementation can be conceived for a terminal such as the above-mentioned cell phone ex114, a send/receive terminal implemented with both an image coding apparatus and an image decoding apparatus, a send terminal implemented with an image coding apparatus only, and a receive terminal implemented with an image decoding apparatus only.

Note that each function block in the block diagrams shown in FIG. 1 and FIG. 2 are typically realized as the LSI that is an integrated circuit device. This LSI may be realized on a single chip or on several chips, for example, a function block except a memory may be realized on a single chip. Depending on the integration degree, an LSI may be called as an IC, a system LSI, a super LSI or an ultra LSI.

An integrated circuit is not necessarily realized in a form of an LSI, it may be realized in a form of an exclusive circuit or a general purpose processor. It is also possible to use the Field Programmable Gate Array (FPGA) that enables programming or a reconfigurable processor that can reconfigure the connection or setting of a circuit cell inside the LSI after generating an LSI.

Further, in the case where technique of realizing an integrated circuit that supersedes the LSI is invented along with the development in semiconductor technique or another derivative technique, as a matter of course, integration of the function blocks may be realized using the invented technique. Bio technique is likely to be adapted.

Also, it is possible to generate the unit of function blocks storing data independent from a chip that includes the other function blocks like the recording medium 115 in this embodiment.

Note that the main part may also be realized by a processor or a program shown in the respective function blocks of block diagrams in FIG. 1 and 2 and in the flow charts shown in FIG. 7, 8, 10, 11 and 12.

In this way, it is possible to use the image coding method or the image decoding method shown in the above-mentioned embodiments for any of the above-mentioned apparatuses or systems, and doing so makes it possible to obtain the effect explained in the above-mentioned embodiments.

Although only some exemplary embodiments of this invention have been described in detail above, those skilled in the art will readily appreciate that many modifications are possible in the exemplary embodiments without materially departing from the novel teachings and advantages of this invention. Accordingly, all such modifications are intended to be included within the scope of this invention.

**Industrial Applicability**

The present invention is suitable for the coding apparatus and the decoding apparatus for coding and decoding images respectively, especially for a web server that distributes moving images, a network terminal that receives images, a digital camera that records and plays back moving pictures, a mobile phone with a camera, a DVD recording and playing back device, a PDA, a personal computer and the like.

**Claims**

1. An image coding apparatus comprising:

   a conversion unit operable to convert first video data into second video data, the second video data having a lower resolution than the first video data;
   a coding unit operable to code to compress the second video data, the coded second video data being outputted as stream data;
   a generation unit operable to generate addition information for converting the resolution of the second video data; and
   an output unit operable to output the stream data and the addition information that are associated with each other.

2. The image coding apparatus according to Claim 1,
   wherein the generation unit generates the addition information indicating motions of images in the first video data.

3. The image coding apparatus according to Claim 2,
   wherein the generation unit includes a motion vector detection unit operable to detect motion vectors in the first video data, and
   the generation unit generates the addition information based on the motion vectors detected by the motion vector detection unit.

4. The image coding apparatus according to Claim 3,
   wherein the generation unit generates difference motion information indicating a difference between a first motion vector and a second motion vector, the first motion vector being detected in the first video data by the motion vector detection unit, the second motion vector being detected in the second video data by the coding unit, the first motion vector and the second motion vector being in a corresponding relation, and the addition information including the difference motion information.

5. The image coding apparatus according to Claim 3,
wherein the addition information includes conversion mode information for converting the resolution of the second video data, and
the conversion mode information indicates one of (a) a first mode indicating that pixels should be interpolated using pixels that exist around current pixels in term of time or space and (b) a second mode indicating that the addition information includes motion vectors.

6. The image coding apparatus according to Claim 3,
wherein the coding unit codes an image adaptively using, block by block, one of (a) an intra coding mode, (b) a forward prediction coding mode, (c) a backward prediction coding mode and (d) a bi-prediction coding mode,
the addition information includes conversion mode information for converting the resolution of the second video data, and
the conversion mode information indicates one of (A) a first mode indicating that pixels should be interpolated using pixels that exist around current pixels in term of time or space, (B) a second mode indicating that the addition information includes a forward motion vector, (C) a third mode indicating that the addition information includes a backward motion vector, and (D) a fourth mode indicating that the addition information includes a plurality of motion vectors.

7. The image coding apparatus according to Claim 6,
wherein the generation unit codes the conversion mode information in association with said (a) to (d).

8. The image coding apparatus according to Claim 5,
wherein the generation unit generates conversion mode information indicating the first mode in the case where a coding residual exceeds a threshold, the coding residual being obtained, block by block or picture by picture, by the coding unit.

9. The image coding apparatus according to Claim 5,
wherein the generation unit generates conversion mode information indicating the first mode in the case where a size of a motion vector exceeds a threshold, the size of the motion vector being obtained block by block by the coding unit .

10. The image coding apparatus according to Claim 5,
wherein the generation unit further includes:

a first image generation unit operable to generate a first high-resolution image by performing pixel interpolation on the second video data locally decoded by the coding unit using pixels that exist around current pixels in term of time or space;
a second image generation unit operable to generate a second high-resolution image using a high-resolution image locally generated by the first image generation unit or the second image generation unit based on the motion vectors detected by the motion vector detection unit; and
a selection unit operable to select the conversion mode based on the first video data, the first high-resolution image and the second high-resolution image.

11. The image coding apparatus according to Claim 10,
wherein the selection unit includes:

a first calculation unit operable to calculate a first difference, that is a difference of data amount between the first video data and the first high-resolution image data;
a second calculation unit operable to calculate a second difference that is a difference of data amount between the first video data and the second high-resolution image data; and
a selection unit operable to select one of a first mode and a second mode as a conversion mode according to the first difference and the second difference.

12. The image coding apparatus according to Claim 11,
wherein the selection unit selects one of the first mode and the second mode as the conversion mode according to the first difference, the second difference and generation coding amount of the addition information generated by the generation unit.

**13.** The image coding apparatus according to Claim 5,
wherein the output unit embeds the addition information in the stream data.

**14.** The image coding apparatus according to Claim 5,
wherein the output unit embeds the addition information in the stream data as user data.

**15.** The image coding apparatus according to Claim 5,
wherein the output unit outputs the addition information in association with the stream data for every predetermined unit of the stream data.

**16.** An image decoding apparatus that decodes coded first video data and coded second video data, comprising:

an input unit operable to obtain addition information indicating motions of images in the first video data and stream data that is the coded second video data;
a decoding unit operable to decode the stream data so as to generate the second video data; and
a high-resolution realizing unit operable to convert the second video data into the first video data based on the addition information, the second video data having a lower resolution than the first video data.

**17.** The image decoding apparatus according to Claim 16,
wherein the high-resolution realizing unit converts the resolution of the second video data by obtaining a partial image from an image whose resolution has already been improved.

**18.** The image decoding apparatus according to Claim 16,
wherein the addition information includes conversion mode information for converting the resolution of the second video data,
the conversion mode information indicates one of (i) a first mode indicating that pixels should be interpolated using pixels that exist around current pixels in term of time or space and (ii) a second mode indicating that the addition information includes motion vectors, and
the high-resolution realizing unit includes:

a first conversion unit operable to convert the resolution of the second video data by obtaining a partial image from an image whose resolution has already been improved according to motion vectors;
a second conversion unit operable to convert the resolution of the second video data by interpolating pixels using pixels that exist around current pixels in term of time or space; and
a switching unit operable to selectively switch between the first conversion unit and the second conversion unit according to the conversion mode information.

**19.** The image decoding apparatus according to Claim 16,
wherein the addition information includes conversion mode information for converting the resolution of the second video data,
the conversion mode information indicates one of (A) a first mode indicating that pixels should be interpolated using pixels that exist around current pixels in term of time or space, (B) a second mode indicating that addition information includes a forward motion vector, (C) a third mode indicating that the addition information includes a backward motion vector, and (D) a fourth mode indicating that the addition information includes a plurality of motion vectors, and
the high-resolution realizing unit includes:

a first conversion unit operable to convert the resolution of the second video data by obtaining a partial image from the image whose resolution has already been improved according to motion vectors;
a second conversion unit operable to convert the resolution of the second video data by interpolating pixels using pixels that exist around current pixels in term of time or space; and
a switching unit operable to selectively switch between the first conversion unit and the second conversion unit according to the conversion mode information.

**20.** The image decoding apparatus according to Claim 16, further comprising
a selection unit operable to select one of the second video data decoded by the decoding unit and the first video data converted by the high-resolution realizing unit.

21. The image decoding apparatus according to Claim 20,
wherein the selection unit selects one of the first and second video data depending on a resolution used by a display device.

22. An image coding method comprising:

converting first video data into second video data, the second video data having a lower resolution than the first video data;
coding to compress the second video data, the coded second video data being outputted as stream data;
generating addition information for converting the resolution of the second video data; and
outputting stream data and the addition information that are associated with each other.

23. A decoding method for decoding coded first video data and coded second video data, comprising:

inputting addition information indicating motions of images in the first video data and stream data that is coded second video data;
decoding the stream data so as to generate the second video data; and
converting a resolution of the second video data so as to generate the first video data based on the addition information.

24. A program for causing a computer to execute a coding method, the coding method comprising:

converting first video data to second video data, the second video data having a lower resolution than the first video data;
coding to compress the second video data, the coded second video data being outputted as stream data;
generating addition information for converting the resolution of the second video data; and
outputting the stream data and the addition information that are associated with each other.

25. A decoding method for decoding coded first video data and coded second video data, comprising:

inputting addition information indicating motions of images in the first video data and stream data that is coded second video data;
decoding the stream data so as to generate the second video data; and
converting a resolution of the second video data so as to generate the first video data based on the addition information.

26. A semiconductor device comprising:

a conversion unit operable to convert first video data to second video data, the second video data having a lower resolution than the first video data;
a coding unit operable to code to compress the second video data, the coded second video data being outputted as stream data;
a generation unit operable to generate addition information for converting the resolution of the second video data; and
an output unit operable to output the stream data and the addition information that are associated with each other.

27. A semiconductor apparatus that decodes coded first video data and coded second video data, comprising:

an input unit operable to input addition information indicating motions of images in the first video data and stream data that is coded second video data;
a decoding unit operable to decode the stream data so as to generate the second video data; and
a high-resolution realizing unit operable to convert a resolution of the second video data so as to generate the first video data based on the addition information.

**FIG. 1**

EP 1 631 089 A1

FIG. 2

EP 1 631 089 A1

# FIG. 3

High-
Resolution
MV

△MV

Stream
MV

DECODED
(UP-Sampled) IMAGE

Original
(High-Resolution) IMAGE

FIG. 4B

FIG. 4A

Example:
Time or space
interpolation

Time

Time

## FIG. 5

Display order →

I1 (1)  B2 (3)  B3 (4)  P4 (2)  B5 (6)  B6 (7)  P7 (5)  B8 (9)  B9 (10)  P10 (8)

H1 Interpolation  H2 MC_BID  H3 MC_BID  H4 MC_FWD  H5 Interpolation  H6 Interpolation  H7 MC_FWD  H8 MC_BID  H9 MC_BID  H10 MC_FWD

EP 1 631 089 A1

**FIG. 6A**

| Coding mode \ Interpolation generation mode | INTRA Interpolation | MC FWD | MC BWD | MC BID | MC Weight | INTRA Interpolation Weight | INTRA-MC Mixture |
|---|---|---|---|---|---|---|---|
| INTRA | 0 | 4 | 5 | 6 | 3 | 1 | 2 |
| INTER-FWD | 5 | 0 | 4 | 3 | 1 | 6 | 2 |
| INTER-BWD | 5 | 4 | 0 | 3 | 1 | 6 | 2 |
| INTER-BID | 5 | 1 | 2 | 0 | 3 | 6 | 4 |

**FIG. 6B**

| INTRA | MC | | Weight | Resolution | Code |
|---|---|---|---|---|---|
| | FWD | BWD | | | |
| 1 | 0 | 0 | 0 | 0 | 0 |
| 0 | 1 | 0 | 0 | 0 | 1 |
| 0 | 0 | 1 | 0 | 0 | 2 |
| 0 | 1 | 1 | 0 | 0 | 3 |
| 1 | 0 | 0 | 0 | 1 | 4 |
| 0 | 1 | 0 | 0 | 1 | 5 |
| 0 | 0 | 1 | 0 | 1 | 6 |
| 0 | 1 | 1 | 0 | 1 | 7 |
| 1 | 0 | 0 | 1 | 0 | 8 |
| 0 | 1 | 0 | 1 | 0 | 9 |
| 0 | 0 | 1 | 1 | 0 | 10 |
| 0 | 1 | 1 | 1 | 0 | 11 |
| 1 | 0 | 0 | 1 | 1 | 12 |
| 0 | 1 | 0 | 1 | 1 | 13 |
| 0 | 0 | 1 | 1 | 1 | 14 |
| 0 | 1 | 1 | 1 | 1 | 15 |

T1 T2 T3 T4

# FIG. 7

```
        ( START )
            │
            ▼
  Code low-resolution image          S71

  Obtain coding residual information  S72

  Generate decoded high-resolution   S73
  image (1 frame before)

  Detect motion in high-resolution image  S74

  Calculate difference between MV in  S75
  low-resolution image and MV in
  high-resolution image

  Generate high-resolution image by   S76
  time or space interpolation in
  low-resolution image

  Select generation mode              S77

  Variable length coding              S78
            │
            ▼
        ( END )
```

# FIG. 8

Generation mode selection processing

S81 — Information amount of coding residual>TH1
- yes →
- no ↓

S82 — Size of motion vector>TH2
- yes →
- no ↓

S82a — Calculate variance between neighboring motion vector

S82b — Variance>TH3
- yes →
- no ↓

S83 — Select realization of high-resolution by MV

S84 — Select time or space interpolation

End

FIG. 9A

User data

| Picture header | Picture data | MB address | //// | MB address | //// | ... |

MB addition information

FIG. 9B

| MB header | | //// | | ... |

MB addition information

## FIG. 10

START

Obtain addition information for high-resolution — S101

Displayable size — S102
— no

yes

Generate high-resolution image — S103

Display image — S104

END

## FIG. 11

START

Decode addition information — S111

Generation mode information included — S112
— no

yes — S113

Realize high-resolution based on generation mode information

Realize high-resolution using time or space interpolation — S114

Output high-resolution image — S115

END

## FIG. 12

```
                    ( START )
                         |
                         v
┌─────────────────────────────────────────────────────┐  S121
│ Detect motion between high-resolution image and      │ <──┐
│ reference image                                       │    │
└─────────────────────────────────────────────────────┘    │
                         |                                   │
┌─────────────────────────────────────────────────────┐  S122  │
│ Calculate difference MV between MV for decoding and  │    │
│ MV for realizing high-resolution                      │    │
└─────────────────────────────────────────────────────┘    │
                         |                                   │
┌─────────────────────────────────────────────────────┐  S123  │
│ Calculate difference value D between high-resolution  │    │
│ image and original image (high-resolution)            │    │
└─────────────────────────────────────────────────────┘    │
                         |                                   │
┌─────────────────────────────────────────────────────┐  S124  │
│ Calculate generation coding amount based on MV       │    │
└─────────────────────────────────────────────────────┘    │
                         |                                   │
┌─────────────────────────────────────────────────────┐  S125  │
│                      COST=                            │    │
│ Σ | high-resolution image−interpolation generation   │    │
│ image | + calculation of generation coding amount    │    │
└─────────────────────────────────────────────────────┘    │
                         |                                   │
                    S126 |      no                           │
              < COST<COST1 > ──────────┐                     │
                    | yes             │                     │
           ┌──────────────────┐ S127  │                     │
           │  COST1=COST      │       │                     │
           └──────────────────┘       │                     │
                    | <───────────────┘                     │
                    S128    no                               │
           < Search range finished? > ──────────────────────┘
                    | yes
                                                          S129
┌─────────────────────────────────────────────────────┐
│ Generate time or space interpolation                 │ <──┐
└─────────────────────────────────────────────────────┘    │
                         |                                   │
┌─────────────────────────────────────────────────────┐  S130  │
│ Calculate difference value D between high-resolution  │    │
│ image and original image (high-resolution)            │    │
└─────────────────────────────────────────────────────┘    │
                         |                                   │
┌─────────────────────────────────────────────────────┐  S131  │
│                      COST=                            │    │
│ Σ | high-resolution image−interpolation generation   │    │
│ image | + calculation of generation coding amount    │    │
└─────────────────────────────────────────────────────┘    │
                         |                                   │
                    S132 |      no                           │
              < COST<COST2 > ──────────┐                     │
                    | yes             │                     │
           ┌──────────────────┐ S133  │                     │
           │  COST2=COST      │       │                     │
           └──────────────────┘       │                     │
                    | <───────────────┘                     │
                    S134    no                               │
        < Generation method finished? > ────────────────────┘
                    | yes
┌─────────────────────────────────────────────────────┐  S135
│ Select generation mode information indicating smallest COST │
└─────────────────────────────────────────────────────┘
                         |
┌─────────────────────────────────────────────────────┐  S136
│ Variable length coding                               │
└─────────────────────────────────────────────────────┘
                         |
                    (  END  )
```

Fig. 13A

Fig. 13B

Fig. 13C

Fig. 14

Streaming server ex103

LSI ex117

Camera ex116

Computer ex111

ex107

Internet ex101

Telephone network ex104

ex108

PDA ex112

ex109

Camera ex113

Internet service provider ex102

Cell phone ex115

ex110

Cell phone ex114

ex100

EP 1 631 089 A1

# Fig. 15

ex115

# Fig. 16

ex201

ex208

ex202

ex203

ex206

ex207

SD

ex204

1 2 3
4 5 6
7 8 9
* 0 #
マナー

ex205

ex115

Fig. 17

Monitor ex404

Reproduction device ex403

ex402

Antenna ex411

Car ex412

Car navigation system ex413

Satellite ex410

Antenna ex406

Monitor ex408

Television ex401

STB ex407

Recorder ex420

ex421

SD

ex422

Cable ex405

Broadcast station ex409

**European Patent Office**

**EUROPEAN SEARCH REPORT**

Application Number

EP 04 02 0569

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X<br>Y | WO 2004/073312 A (KONINKLIJKE PHILIPS ELECTRONICS N.V; BRULS, WILHELMUS, H., A; KLEIN GU) 26 August 2004 (2004-08-26)<br>* page 3, line 34 - page 8, line 19; figure 3 * | 1-7, 10-20, 22-27<br>8,9,21 | H04N7/26<br>H04N7/46<br>H04N7/36 |
| X | US 2002/015092 A1 (ELBAZ MOSHE ET AL) 7 February 2002 (2002-02-07)<br>* paragraphs [0025], [0029], [0030], [0039], [0046]; figure 1 * | 1-3,22, 24,26 | |
| X<br>Y | US 2002/176495 A1 (SUN HUIFANG ET AL) 28 November 2002 (2002-11-28)<br>* paragraphs [0058], [0077]; figure 9 * | 1-3,22, 24,26<br>21 | |
| X | US 6 349 154 B1 (KLEIHORST RICHARD P) 19 February 2002 (2002-02-19)<br>* column 2, line 66 - column 3, line 65; figure 2 * | 16,23, 25,27 | |
| Y | EP 1 414 245 A (KABUSHIKI KAISHA TOSHIBA) 28 April 2004 (2004-04-28)<br>* paragraphs [0020], [0035]; figure 4 * | 8,9 | TECHNICAL FIELDS SEARCHED (Int.Cl.7)<br><br>H04N |
| A | US 6 510 177 B1 (DE BONET JEREMY ET AL) 21 January 2003 (2003-01-21)<br>* column 13, line 51 - line 56; figure 9 *<br>* column 14, line 46 - line 53 * | 1-27 | |
| A | EP 0 727 910 A (THOMSON MULTIMEDIA) 21 August 1996 (1996-08-21)<br>* abstract *<br>* page 3, line 56 - page 4, line 5; figure 3 * | 1-27 | |

The present search report has been drawn up for all claims

| Place of search | Date of completion of the search | Examiner |
|---|---|---|
| The Hague | 28 January 2005 | Georgiou, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 04 02 0569

This annex lists the patent family members relating to the patent documents cited in the above-mentioned European search report.
The members are as contained in the European Patent Office EDP file on
The European Patent Office is in no way liable for these particulars which are merely given for the purpose of information.

28-01-2005

| Patent document cited in search report | | Publication date | Patent family member(s) | | Publication date |
|---|---|---|---|---|---|
| WO 2004073312 | A | 26-08-2004 | WO 2004073312 A1 | | 26-08-2004 |
| US 2002015092 | A1 | 07-02-2002 | US 6300973 B1 | | 09-10-2001 |
| | | | AU 2393001 A | | 24-07-2001 |
| | | | DE 10190285 T0 | | 02-05-2002 |
| | | | GB 2363687 A | ,B | 02-01-2002 |
| | | | GB 2397964 A | ,B | 04-08-2004 |
| | | | WO 0152538 A1 | | 19-07-2001 |
| | | | US 2003174202 A1 | | 18-09-2003 |
| | | | US 6757005 B1 | | 29-06-2004 |
| US 2002176495 | A1 | 28-11-2002 | EP 1386494 A2 | | 04-02-2004 |
| | | | WO 02093937 A2 | | 21-11-2002 |
| | | | JP 2004520771 T | | 08-07-2004 |
| US 6349154 | B1 | 19-02-2002 | DE 69824554 D1 | | 22-07-2004 |
| | | | EP 0961991 A1 | | 08-12-1999 |
| | | | WO 9933024 A1 | | 01-07-1999 |
| | | | JP 2001515679 T | | 18-09-2001 |
| EP 1414245 | A | 28-04-2004 | JP 2004007377 A | | 08-01-2004 |
| | | | BR 0304533 A | | 27-07-2004 |
| | | | CA 2450246 A1 | | 23-10-2003 |
| | | | EP 1414245 A1 | | 28-04-2004 |
| | | | US 2004141615 A1 | | 22-07-2004 |
| | | | WO 03088679 A1 | | 23-10-2003 |
| US 6510177 | B1 | 21-01-2003 | NONE | | |
| EP 0727910 | A | 21-08-1996 | US 5621467 A | | 15-04-1997 |
| | | | CN 1141561 A | ,C | 29-01-1997 |
| | | | EP 0727910 A2 | | 21-08-1996 |
| | | | JP 8256311 A | | 01-10-1996 |
| | | | SG 73362 A1 | | 20-06-2000 |

EPO FORM P0459

For more details about this annex : see Official Journal of the European Patent Office, No. 12/82